# EUROPÄISCHE PATENTSCHRIFT

(11) **EP 1 282 775 B1**
(45) Veröffentlichungstag und Bekanntmachung des Hinweises auf die Patenterteilung: **24.11.2004**
(21) Anmeldenummer: 01917054.7
(22) Anmeldetag: 02.03.2001
(51) Int. Cl.: F03D 11/00, F03D 1/06, H02G 13/00

(54) **WINDENERGIEANLAGE**
WIND POWER INSTALLATION
EOLIENNE

(30) Priorität: 06.05.2000 DE 10022128
(43) Veröffentlichungstag der Anmeldung: 12.02.2003
(73) Patentinhaber: Wobben, Aloys, 26607 Aurich (DE)
(72) Erfinder: Wobben, Aloys, 26607 Aurich (DE)
(74) Vertreter: Göken, Klaus G.
(86) Internationale Anmeldenummer: PCT/EP2001/002375
(87) Internationale Veröffentlichungsnummer: WO 2001/086144

(56) Entgegenhaltungen:
- EP-A- 0 707 145
- EP-A- 1 036 937
- DE-A- 4 436 197
- DE-C- 11 195
- DE-C- 28 489
- DE-C- 19 748 716
- US-A- 5 716 193

## Beschreibung

Die Erfindung betrifft eine Windenergieanlage. Solche Windenergieanlagen modemen Typs, beispielsweise ein vom Typ E-40 oder E-66 der Firma Enercon, sind regelmäßig mit einem Blitzschutzsystem ausgestattet, welches beispielsweise aus DE 44 36 290, DE 198 26 086, DE 195 01 267, DE 44 45 899, WO 00/14405 oder WO 96/07825 bekannt ist. Aus DE 44 36 197 ist eine Windenergieanlage mit einer Blitzschutzeinrichtung gemäß dem Oberbegriff des Anspruches 21 bekannt.

Bei solchen wie vorbeschrieben bekannten Blitzschutzsystemen kann sich dann, wenn das Rotorblatt galvanisch von der Nabe getrennt ist, das jeweilige Rotorblatt statisch aufladen. Diese elektrostatische Aufladung eines Rotorblattes entsteht durch die Luftreibung der rotierenden Rotorblätter des Rotors einer Windenergieanlage. Je nach Luftfeuchtigkeit bzw. anderer ungünstiger Witterungseinflüsse laden sich die Rotorblätter (bzw. deren Blitzschutzsysteme) schneller oder langsamer auf. Die statische Aufladung erfolgt solange, bis die Überschlagsspannung der Luftstrecke erreicht wird. Dann erfolgt der Überschlag und das gesamte System bzw. die Rotorblätter entladen sich. Ein solcher Überschlag erzeugt elektromagnetische Wellen (EMV) mit einer extrem hohen Bandbreite, weil der Überschlag quasi in Form eines Impulses erfolgt, der idealerweise über eine extreme Bandbreite (idealerweise über eine unendliche Bandbreite) verfügt. Diese schlagartigen Entladungen, die nicht auf einen Blitzeinschlag wegen eines Gewitters, sondern von der elektrostatischen Aufladung der Rotoren herrührt, stören die gesamte Elektronik der Windenergieanlage, die sich im Umfeld des Überschlages befindet, wie beispielsweise die Computer oder Mikroprozessoren die ein einzelnes Rotorblatt steuern und regeln. Betroffen sind aber auch andere elektronische Einrichtungen der Windenergieanlage, die sich in der Gondel oder in der Nähe der Funkenüberschlagsstrecke befinden. Durch das Aufladen der rotierenden Rotorblätter kommt es regelmäßig zu Überschlägen an der Funkenstrecke mit ebenso regelmäßigen Störungen der Elektronik, was schon zum Schutze der gesamten elektronischen Anlageeinrichtungen nicht erwünscht ist.

Es ist Aufgabe der vorliegenden Erfindung, die vorgenannten Nachteile zu vermeiden und insbesondere die Zahl der Störung an der Elektronik wegen der Überschläge an der Funkenstrecke zu minimieren.

Die Aufgabe wird mittels einer Windenergieanlage mit den Merkmalen nach Anspruch 1 bzw. 21 gelöst. Vorteilhafte Weiterbildungen sind in den Unteransprüchen beschrieben.

Die Erfindung beruht auf dem Vorschlag, die elektrostatischen Ladungen der Rotorblätter kontinuierlich zu entladen. Hierbei ist darauf zu achten, dass die Spannung an den Funkenstrecken kurz vor einem Überschlag je nach Feuchtigkeit leicht 20 bis 30 kV erreichen kann. Mithin muss die Vorrichtung zur kontinuierlichen Entladung (Entladeschaltung) der Rotorblätter im wesentlichen zwei Bedingungen erfüllen, nämlich erstens, die kontinuierliche Entladestrecke muss so niederohmig sein, dass eine statische Aufladung der Rotorblätter vermieden wird und zweitens muss sie in der Lage sein, einer Stoß-Spannung in Höhe von 30 kV und mehr zu widerstehen (solche Stoß-Spannungen stellen sich bei Blitzeinschlägen ein).

Die Erfindung wird nachfolgend anhand von zeichnerischen Darstellungen näher erläutert. In den Zeichnungen stellen dar:
- Fig. 1: eine Reihenschaltung eines ohmschen Widerstandes und einer Induktivität;
- Fig. 2: eine Ausführung der Erfindung mit fünf in Reihe geschalteten, gewickelten Drahtwiderständen;
- Fig. 3: eine Ansicht/ein Teilquerschnitt durch eine erfindungsgemäße Windenergieanlage;
- Fig. 4: eine vergrößerte Darstellung des Ausrisses III aus Fig. 3;
- Fig. 5: eine weitere vergrößerte Detailansicht aus Fig. 3; und
- Fig. 6: eine Detailansicht aus dem Bereich V in Fig. 3.

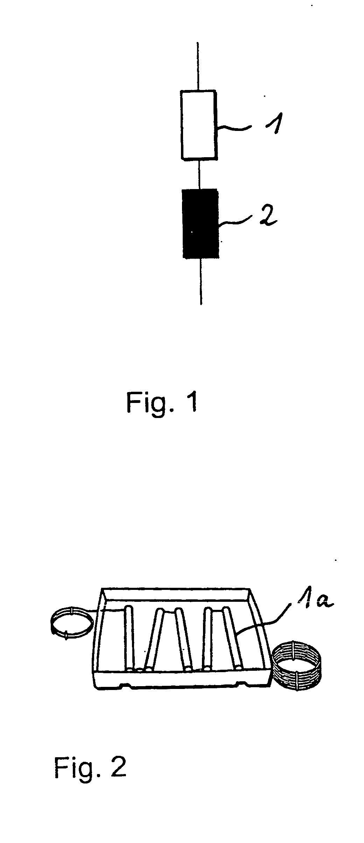

Es ist besonders zweckmäßig, wenn die Vorrichtung zur kontinuierlichen Entladung elektrostatischer Ladung der Rotorblätter aus einer Entladeschaltung besteht, die einer Reihenschaltung eines ohmschen Ableitwiderstandes 1 und eine Induktivität 2 aufweist. Dies ist in Figur 1 dargestellt. Hierbei weist der Ableitwiderstand vorzugsweise einen Wert von ca. 50 kΩ und die Induktivität vorzugsweise einen Wert von 10 µH oder mehr auf.

Während der statischen Entladung der Rotorblätter, ist die Induktivität 2 nicht in Funktion, da die Ableitströme einen Gleichstrom mit sehr kleiner Amplitude darstellen. Somit ist jedes Rotorblatt für die statische Entladung mit einem Widerstand von 50 kΩ mit dem Erdpotential verbunden, wenn die in Figur 1 dargestellte Schaltung ein Rotorblatt mit dem Erdanschluss des Erdpotentials verbindet.

Im Falle eines Blitzeinschlages (aufgrund eines Gewitters) steigt die Spannung an der Funkenstrecke (die Entladungsschaltung nach Figur 1) sehr hoch an. Die Höhe der Spannung ist von dem Abstand, dem Krümmungsradius der Kontaktspitzen und der Luftfeuchtigkeit abhängig. Die Induktivität 2 begrenzt nun den Anstieg des Stromes, der durch den statischen Ableiter (R+L) fließt. Damit ist ein ausreichender passiver Schutz für den Ableitwiderstand gegeben.

Besonders vorteilhaft ist es, wenn der ohmsche Widerstand 1 durch ein Drahtwiderstand 1a gebildet wird und wenn dieser gleichzeitig aufgewickelt ist, kann der ohmsche Widerstand 1 wie auch die Induktivität 2 sehr platzsparend gestaltet werden. Dies ist in Figur 2 der Anmeldung in einer Ansicht gezeigt. Hierbei sind fünf in Reihe geschaltete, gewickelte Drahtwiderstände 1a dargestellt, die über entsprechende Zuleitungen verfügen.

Die Ausführung eines gewickelten Drahtwiderstandes hat den Vorteil, dass eine gleiche Spannungsverteilung über die gesamte Länge der Widerstände gegeben ist.

Ein weiterer Vorteil der erfindungsgemäßen Ausbildung besteht in der sehr einfachen Lösung, die gleichwohl einen sehr wirksamen Schutz der gesamten Elektronik der Windenergieanlage gewährleistet und eine schlagartige (stoßartige) Entladung von elektrostatischen Ladungen mit Hilfe des beschriebenen Statikableiters gewährt.

Der Statikableiter (die Vorrichtung zur kontinuierlichen Entladung elektrostatischer Ladung) besteht letztlich aus einer einfachen elektrischen Impedanz mit einer ohmschen und einer induktiven Komponente und der Statikableiter ist parallel zur Funkenstrecke angeordnet.

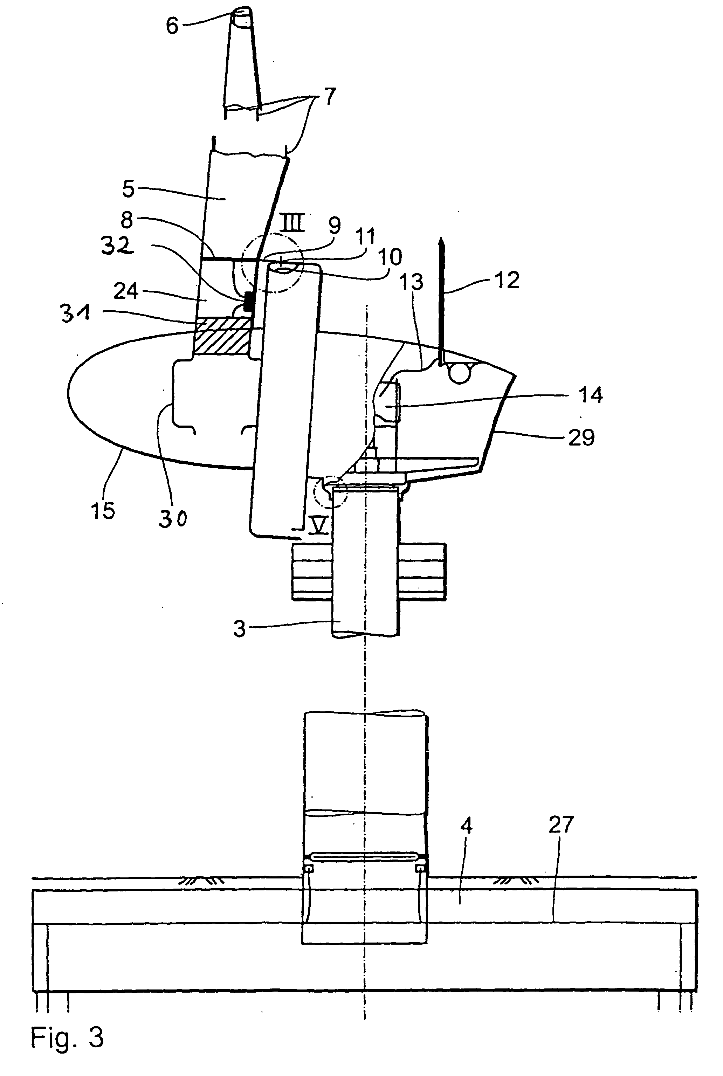

Fig. 3 zeigt die Anordnung des erfindungsgemäßen Statikableiters bei einer Windenergieanlage. Die hierbei dargestellte Windenergieanlage hat einen Maschinenträger, der eine Rotomabe, an der Rotorblätter angeordnet sind, sowie einen an die Rotomabe gekoppelten Generator aufnimmt. Der Maschinenträger 14 ist auf einem Turm 3 um eine lotrechte Achse drehbar angeordnet. Der Turm 3 ist in einem Fundament 4 verankert. Zu dessen Übersicht ist ein Rotorblatt 5 dargestellt. Die Spitze des Rotorblattes 5 ist als Aluminiumformteil 6 ausgebildet. Auf der Rotorblattwurzel 24 ist ein die Rotorblattwurzel 24 total umlaufender Aluminiumring 8 angeordnet. Stangenförmige Leitelemente 7, die in der Vorderkante und an der Hinterkante des Rotorblatts verlaufen, verbinden das Aluminiumformteil 6 der Spitze elektrisch leitend mit dem auf der Rotorblattwurzel 24 angeordneten Aluminiumring 8.

Im Bereich der Rotorblattwurzel 24 ist auf Höhe des Aluminiumrings 8 eine Fangstange 9 als Blitzableitungsorgan angeordnet. Die Fangstange 9 ist über einen Überleitungsvorsprung 11 einem elektrisch leitenden Ableitring bis auf einen vorbestimmten Abstand, z. B. 3 mm, angenähert. Mit ihrem dem Überleitungsvorsprung 11 abgewandten freien Ende ist die Fangstange 9 auf dem Aluminiumring 8 bis auf einen vorbestimmten, etwa gleichen Abstand angenähert.

Der geerdete Ableitring 10 ist koaxial zur Rotorwelle angeordnet. Somit ist die Annäherung des Überleitvorsprungs 11 während der vollständigen Drehung des Rotorblatts 5 gewährleistet.

Der Maschinendreher 14 wird von einer zusätzlichen Fangstange 12 überragt. die an den Maschinenträger 14 mit einer elektrisch leitenden Verbindung 13 angeschlossen ist.

Zwischen dem Aluminiumring 8 und dem Blattadapter ist der Statikableiter leitend angeordnet. Hierüber kann die statische Abteilung der Rotorblätter wie vorbeschrieben erfolgen.

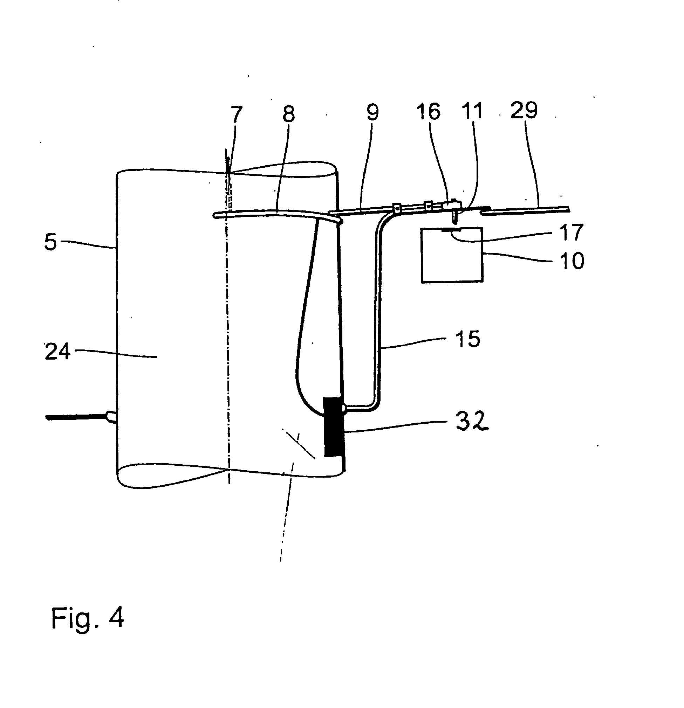

Die in Fig. 3 dargestellte Ansicht ist in vergrößerter Form nochmals in Fig. 4 gezeigt.

Hierbei ist der horizontale Aluminiumring 8 nur abschnittsweise um die Rotorblattwurzel herumgeführt. Das untere Ende des Leitelementes 7 der dargestellten Stützeinrichtung ist mit dem Aluminiumring 8 elektrisch leitend verbunden.

Der elektrisch leitende Blitzableitungsweg zwischen dem Aluminiumring 8 und dem Ableitring 10 wird durch die Fangstange 9 hergestellt, die mit Schellen o.dgl. auf der Rotomabenverkleidung 15 aus elektrisch nicht leitendem Material waagerecht liegend befestigt ist und sich somit mit dem Rotorblatt 5 mitdreht. An dem, dem Rotorblatt 5 abgewandten Ende der Fangstange 9 ist ein Kreuzverbinder 16 angeordnet, der die Fangstange 9 mit dem Überleitvorsprung 11 verbindet. Der Überleitvorsprung 11 ist senkrecht durch die Rotomabenverkleidung 15 hindurch dem Ableitring 10 bis auf einen bestimmten Abstand angenähert.

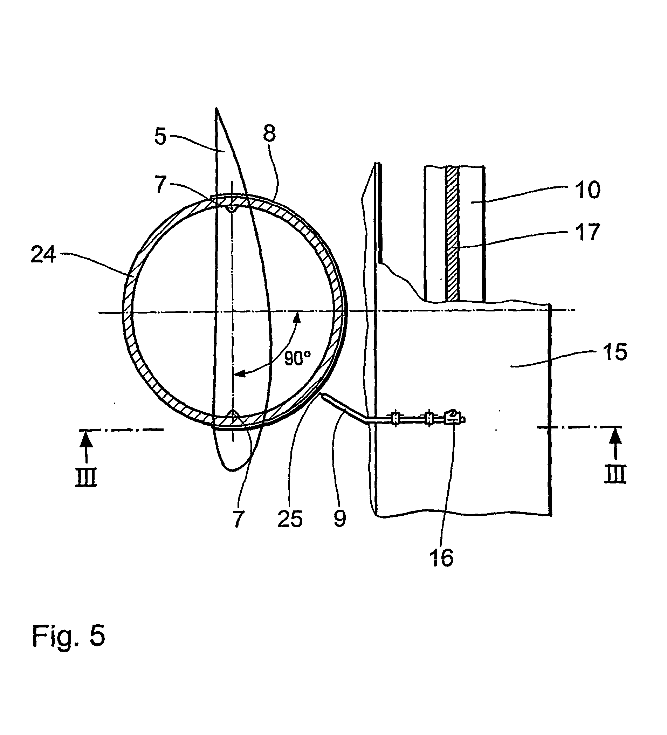

Die Darstellung in Fig. 5 verdeutlicht auch, dass der Ableitring 10 im Bereich der Annäherung des Überleitvorsprunges 11 auf Höhe des Kreuzverbinders 16 einen vorbestimmten Blitzableitungsweg 17 in Form einer geringeren Lackschichtdicke aufweist. Fig. 5 zeigt auch, dass der Aluminiumring 8 um die Rotorblattwurzel 24 halbkreisförmig herumgeführt ist, um beide Leitelemente 7 miteinander zu verbinden und um bei den möglichen Winkeleinstellungen des Rotorblattes eine elektrische Wirkverbindung zur Fangstange 9 zu gewährleisten. Die Fangstange 9 weist an ihrem dem Aluminiumring 8 bis auf einen vorbestimmten Abstand angenäherten freien Ende 25 eine die Feldstärke im Vergleich zur Umgebung erhöhende kegelförmige Spitze auf.

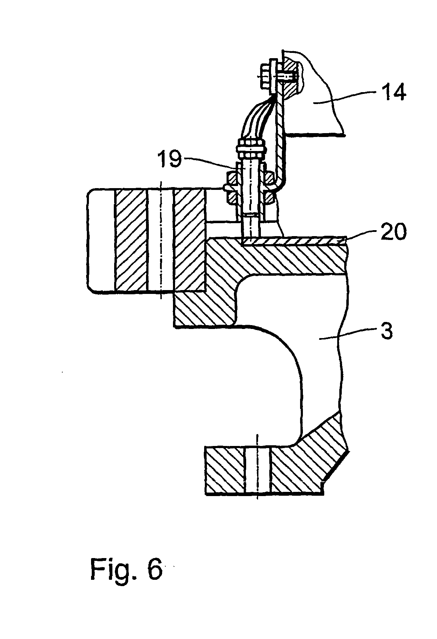

Fig. 6 zeigt eine elektrisch leitende Verbindung zwischen dem Maschinenträger 14 und dem oberen Bereich des Turms 3. In diesem Bereich des Turms 3 ist eine waagerecht liegende Reibscheibe 20 koaxial zur Drehachse des Maschinenträgers 14 angeordnet. Der Maschinenträger 14 hat in einem den Turm 3 zugekehrten Bereich ein Blitzableitungselement, das als mit einem Anpressdruck beaufschlagter Stößel 19 ausgebildet ist. Dieser Stößel 19 ist in diesem Bereich so am Maschinenträger 14 senkrecht angeordnet, dass er auf die Reibscheibe 20 drückt und somit eine elektrisch leitende Verbindung herstellt. Auch bei Drehungen des Maschinenträgers 14 bleibt diese Verbindung aufgrund der schleifenden Anlage bestehen.

Ein in die Windenergieanlage einschlagender Blitz wird folgendermaßen abgeleitet:

Ein in ein Rotorblatt 5 einschlagender Blitz wird zunächst in den Maschinenträger 14 abgeleitet. Ausgehend vom Aluminiumformteil 6 oder einem Leitelement 7 wird der Blitz über die Leitelemente 7 in den Aluminiumring 8 abgeleitet. Unabhängig vom momentanen Rotorblattwinkel wird der Blitz vom Aluminiumring 8 dann über die Fangstange 9 in den Ableitring 10 übergeleitet Über den vorbestimmten Blitzableitungsweg 17 des Ableitringes 10 wird der Blitz über nicht dargestellte leitende Verbindungen in den Maschinenträger 14 eingeleitet.

Ein in die zusätzliche Fangstange 12 einschlagender Blitz wird über die Verbindung 13 gleichfalls in den Maschinenträger 14 eingeleitet.

Die Blitzableitung vom Maschinenträger 14 in den Turm 3 erfolgt über die sich in schleifender Anlage befindenden Stößel 19 und Reibscheibe 20. Die Blitzableitung ist somit auch unabhängig von der momentanen Drehstellung des Maschinenträgers 14 gewährleistet.

Die weitere Blitzableitung erfolgt über den Turm 3, das Fundament 4 und die in das Erdreich laufenden Ringerder 27.

Wie beschrieben, zeigt die Erfindung auf, wie einerseits in hervorragender Weise eine kontinuierliche Entladung von elektrostatischen Ladungen von einem Rotorblatt erfolgen kann, wie andererseits aber auch Blitzeinschläge im Rotorblatt abgeführt werden können, ohne Schäden an der Windenergieanlage zu verursachen. Während die elektrostatischen Ladungen über den Statikableiter und über die Nabe direkt abgeführt werden, werden Ladungen, die von einem Blitzschlag herrühren an der Nabe vorbei, insbesondere am Lager der Nabe vorbei abgeführt. Die Leitungen für elektrostatische Ladungen wie auch Blitzströme von der Rotorblattspitze bis zum Blattwurzelbereich können die gleichen sein. Zum Schutz der Windenergieanlage muss aber dafür gesorgt werden, dass Blitzeinschläge nicht über die Nabe bzw. die Lager der Nabe geführt werden.

Die Auftrennung der verschiedenen Ladungswege für die elektrostatische Ladung einerseits und Blitzströme andererseits ist äußerst effektiv und konnte bei Windenergieanlagen sehr erfolgreich getestet werden. Der Aufwand ist insgesamt gering.

Mit der Erfindung ist es möglich, dass Störungen, die einerseits von der elektrostatischen Aufladung der Rotorblätter herrühren könnten oder auch vom Blitzeinschlag, deutlich verringert werden können. Die besondere Kombination aus der Ableitung elektrostatischer Ströme und der Blitzströme über unterschiedliche Leitungswege hat sich bei mehreren Anlagen als überaus erfolgreich bewiesen.

## Patentansprüche

1. Windenergieanlage mit einer Vorrichtung zur kontinuierlichen Entladung elektrostatischer Ladung von wenigstens einem Rotorblatt (5) der Windenergieanlage, wobei die Vorrichtung zur kontinuierlichen Entladung aus einer Reihenschaltung eines ohmschen Widerstandes (1) und einer Induktivität (20) besteht und die Schaltung elektrisch das Rotorblatt (5) mit einem Erdungsanschluss (27) verbindet.

2. Windenergieanlage nach Anspruch 1,
**dadurch gekennzeichnet, dass** die Vorrichtung zur kontinuierlichen Entladung parallel zu einer Funkenstrecke eines Blitzschutzsystems der Windenergieanlage geschaltet ist.

3. Windenergieanlage nach einem der vorherigen Ansprüche,
**dadurch gekennzeichnet, dass** der ohmsche Widerstand (1) ein Widerstand von wenigstens 10 kΩ, vorzugsweise 50kΩ aufweist.

4. Windenergieanlage nach einem der vorherigen Ansprüche,
**dadurch gekennzeichnet, dass** die Induktivität (2) wenigstens 2µH, vorzugsweise größer als 10µH ist.

5. Windenergieanlage nach einem der vorherigen Ansprüche,
**dadurch gekennzeichnet, dass** die Induktivität (2) aus einem gewickelten Drahtwiderstand (1a) besteht.

6. Windenergieanlage nach einem der vorherigen Ansprüche,
**dadurch gekennzeichnet, dass** der ohmsche Widerstand (1) aus einem Drahtwiderstand (1a) besteht.

7. Windenergieanlage nach einem der vorhergehenden Ansprüche,
**dadurch gekennzeichnet, dass** die Vorrichtung zur kontinuierlichen Entladung elektrostatischer Ladung einerseits mit dem elektrischen Blitzableiteranschluss (8) des Rotorblattes (5) und andererseits mit dem Anschluss (Blattadapter) des Rotorblattes elektrisch verbunden ist.

8. Windenergieanlage nach Anspruch 7,
**dadurch gekennzeichnet, dass** Ladungen, die über die Vorrichtung zur kontinuierlichen Entladung elektrostatischer Ladung abgeführt werden, über die Nabe der Windenergieanlage abgeführt werden.

9. Windenergieanlage nach einem der vorhergehenden Ansprüche,
**gekennzeichnet durch** einen Maschinenträger, der auf einem Unterbau drehbar angeordnet ist, mit einer auf dem Maschinenträger gelagerten Rotorwelle mit einer Rotomabe, mit mindestens einem Rotorblatt und mit einer Blitzschutzüberleitung von den Rotorblättern zu einem feststehenden, elektrisch leitenden Bauteil des Maschinenträgers, der geerdet ist, wobei die Blitzschutzüberleitung als ein im Bereich der Rotorblattwurzel (24) in einem Isolations-Abstand zur Rotomabe angeordnetes, mit der Rotorblattwurzel (24) in elektrischer Wirkverbindung stehendes Blitzableitungsorgan ausgebildet ist, das einen Überleitungsvorsprung (11) aufweist, der dem feststehenden, elektrisch leitenden Bauteil des Maschinenträgers (14) bis auf einen vorbestimmten Abstand angenähert ist.

10. Windenergieanlage nach Anspruch 9,
**dadurch gekennzeichnet, dass** das Blitzableitungsorgan eine Fangstange (9) ist.

11. Windenergieanlage nach Anspruch 9 oder 10,
**dadurch gekennzeichnet, dass** das feststehende, elektrisch leitende Bauteil des Maschinenträgers (14) ein koaxial zur Rotorwelle angeordneter Ableitring (10) ist und dass dieser in seinem dem Überleitungsvorsprung (11) zugekehrten Bereich einen vorbestimmten Blitzableitungsweg (17) aufweist.

12. Windenergieanlage nach Anspruch 10,
**dadurch gekennzeichnet, dass** die Fangstange (9) mit ihrem dem Überleitungsvorsprung (11) abgewandten freien Ende (25) einem auf der Rotorblattwurzel (24) angeordneten, elektrischen Leitelement bis auf einen vorbestimmten Abstand angenähert ist.

13. Windenergieanlage nach einem der vorhergehenden Ansprüche, mit einem Maschinenträger, der auf einem Unterbau drehbar angeordnet ist, mit einer auf dem Maschinenträger gelagerten Rotorwelle mit einer Rotomabe und mit mindestens einem Rotorblatt,
**dadurch gekennzeichnet, dass** jedes Rotorblatt (5) an seiner Spitze und in einem Isolations-Abstand zur Rotomabe auf seiner Rotorblattwurzel (24) angeordnete, elektrische Leitelemente aufweist, die miteinander elektrisch leitend verbunden sind.

14. Windenergieanlage nach Anspruch 13,
**dadurch gekennzeichnet, dass** das an der Spitze des Rotorblattes (5) angeordnete Leitelement als Aluminiumformteil (6) ausgebildet ist.

15. Windenergieanlage nach Anspruch 13 oder 14,
**dadurch gekennzeichnet, dass** in der Vorderkante und in der Hinterkante jedes Rotorblattes (5) elektrische Leitelemente (7) angeordnet sind, welche die an der Spitze des Rotorblattes (5) und auf seiner Rotorblattwurzel (24) angeordneten Leitelemente elektrisch leitend verbinden.

16. Windenergieanlage nach einem der Ansprüche 12 bis 15,
**dadurch gekennzeichnet, dass** das auf der Rotorblattwurzel (24) angeordnete Leitelement ein auf der Oberfläche der Rotorblattwurzel (24) mindestens abschnittsweise horizontal umlaufender Aluminiumring (8) ist.

17. Windenergieanlage nach einem der vorhergehenden Ansprüche, mit einem Maschinenträger, der auf einem Unterbau drehbar angeordnet ist, mit einer auf dem Maschinenträger gelagerten Rotorwelle mit einer Rotomabe und mit mindestens einem Rotorblatt,
**dadurch gekennzeichnet, dass** in einem Bereich des Maschinenträgers (14), der dem Unterbau zugekehrt ist, ein Blitzableitungselement angeordnet ist, das sich mit einem elektrisch leitenden Bauelement des Unterbaus in schleifender Anlage befindet.

18. Windenergieanlage nach Anspruch 17,
**dadurch gekennzeichnet, dass** das Blitzableitungselement als ein mit einem Anpressdruck beaufschlagter Stößel (19) ausgebildet ist.

19. Windenergieanlage nach Anspruch 17 oder 18,
**dadurch gekennzeichnet, dass** das elektrisch leitende Bauelement des Unterbaus eine Reibscheibe (20) ist, die im oberen Bereich des Unterbaus in einer waagerechten Ebene und koaxial zur Drehachse des Maschinenträgers (14) liegend angeordnet ist.

20. Windenergieanlage nach einem der vorherigen Ansprüche,
**dadurch gekennzeichnet, dass** das Rotorblatt aus einem elektrischen Nichtleitermaterial wie beispielsweise glasfaserverstärktem Kunststoff besteht.

21. Windenergieanlage mit einer Blitzschutzeinrichtung und einem Blitzableitorgan,
**dadurch gekennzeichnet, dass** die Windenergieanlage eine Vorrichtung zur Entladung elektrostatischer Ladungen von wenigstens einem Rotorblatt (5) der Windenergieanlage aufweist, und dass die Windenergieanlage eine Rotomabe (30) und daran befestigte Rotorblätter (5) aufweist und im Bereich der Rotorblattnabe die elektrostatischen Ladungen über einen anderen Weg abgeführt werden. als bei einem Blitz eingeprägte Ladungen, wobei die elektrostatischen Ladungen über die Nabe (30) und die beim Blitz eingeprägten Ladungen an der Nabe vorbei abgeführt werden.

## Claims

1. Wind energy installation having an apparatus for continuous discharging of electrostatic charge from at least one rotor blade (5) of the wind energy installation, with the apparatus for continuous discharging comprising a non-reactive resistance (1) and an inductance (20) connected in series, and the circuit electrically connecting the rotor blade (5) to an earthing connection (27).

2. Wind energy installation according to Claim 1,
**characterized in that** the apparatus for continuous discharging is connected in parallel with a spark gap in a lightning protection system for the wind energy installation.

3. Wind energy installation according to one of the preceding claims,
**characterized in that** the non-reactive resistance (1) has a resistance of at least 10 kΩ, and is preferably 50 kΩ.

4. Wind energy installation according to one of the preceding claims,
**characterized in that** the inductance (2) is at least 2 µH, and is preferably more than 10 µH.

5. Wind energy installation according to one the preceding claims,
**characterized in that** the inductance (2) is formed by a wound wire resistance (1a).

6. Wind energy installation according to one of the preceding claims,
**characterized in that** the non-reactive resistance (1) is formed from a wire resistance (1a).

7. Wind energy installation according to one of the preceding claims,
**characterized in that** the apparatus for continuous discharging of electrostatic charge is electrically connected on one side to the electrical lightning conductor connection (8) for the rotor blade (5), and on the other side to the connection (blade adapter) of the rotor blade.

8. Wind energy installation according to Claim 7,
**characterized in that** charges which are dissipated via the apparatus for continuous discharging of electrostatic charge are dissipated via the hub of the wind energy installation.

9. Wind energy installation according to one of the preceding claims,
**characterized by** a machine mount which is arranged on a foundation such that it can rotate, having a rotor shaft which is mounted on the machine mount and has a rotor hub, having at least one rotor blade and having a lightning conductor from the rotor blades to a fixed, electrically conductive component of the machine mount which is earthed, with the lightning conductor being formed by a lightning dissipation element which is arranged in the area of the rotor blade root (24), separated by an isolation distance from the rotor hub, is electrically operatively connected to the rotor blade root (24) and has a lightning conductor projection (11) which is at a predetermined distance from the fixed, electrically conductive component of the machine mount (14).

10. Wind energy installation according to Claim 9,
**characterized in that** the lightning dissipation element is an air termination rod (9).

11. Wind energy installation according to Claim 9 or 10,
**characterized in that** the fixed, electrically conductive component of the machine mount (14) is a dissipation ring (10) which is arranged coaxially with respect to the rotor shaft, and **in that** this dissipation ring (10) has a predetermined lightning dissipation path (17) in its area facing the lightning conductor projection (11).

12. Wind energy installation according to Claim 10,
**characterized in that** the free end (25) of the air termination rod (9) facing away from the lightning conductor projection (11) is at a predetermined distance from an electrically conductive element arranged on the rotor blade root (24).

13. Wind energy installation according to one of the preceding claims, having a machine mount which is arranged on a foundation such that it can rotate, having a rotor shaft which is mounted on the machine mount and has a rotor hub, and having at least one rotor blade,
**characterized in that**, at its tip and separated by an isolation distance from the rotor hub, each rotor blade (5) has electrically conductive elements which are arranged on its rotor blade root (24) and are electrically conductively connected to one another.

14. Wind energy installation according to Claim 13,
**characterized in that** the conductive element which is arranged at the tip of the rotor blade (5) is an aluminium moulding (6).

15. Wind energy installation according to Claim 13 or 14,
**characterized in that** electrically conductive elements (7) are arranged in the leading edge and in the trailing edge of each rotor blade (5) and electrically conductively connect the conductive elements which are arranged at the tip of the rotor blade (5) and on its rotor blade root (24).

16. Wind energy installation according to one of Claims 12 to 15,
**characterized in that** the conductive element which is arranged on the rotor blade root (24) is an aluminium ring (8) which is horizontally circumferential, at least in places, on the surface of the rotor blade root (24).

17. Wind energy installation according to one of the preceding claims, having a machine mount which is arranged on a foundation such that it can rotate, having a rotor shaft which is mounted on the machine mount and has a rotor hub, and having at least one rotor blade,
**characterized in that** a lightning conductor element is arranged in an area of the machine mount (14) facing the foundation and makes a sliding contact with an electrically conductive component on the foundation.

18. Wind energy installation according to Claim 17,
**characterized in that** the lightning dissipation element is a plunger (19) to which a contact pressure is applied.

19. Wind energy installation according to Claim 17 or 18,
**characterized in that** the electrically conductive component on the foundation is a friction disc (20), which is arranged lying on a horizontal plane, and coaxially with respect to the rotation axis of the machine mount (14), in the upper area of the foundation.

20. Wind energy installation according to one of the preceding claims,
**characterized in that** the rotor blade is composed of an electrically non-conductive material, such as glass-fibre-reinforced plastic.

21. Wind energy installation having a lightning protection device and having a lightning dissipation element,
**characterized in that** the wind energy installation has an apparatus for discharging electrostatic discharges from at least one rotor blade (5) of the wind energy installation, and **in that** the wind energy installation has a rotor hub (30) and rotor blades (5) attached to it, and the electrostatic charges are dissipated via a different path in the area of the rotor blade hub than charges which occur in the event of a lightning strike, with the electrostatic charges being dissipated via the hub (30), while charges that occur as a result of the lightning strike are dissipated such that they bypass the hub.

## Revendications

1. Station éolienne équipée d'un dispositif de décharge continue de la charge électrostatique d'au moins une pale de rotor (5) de la station éolienne, le dispositif de décharge continue consistant en un circuit présentant en série une résistance ohmique (1) et une résistance inductive (20), ledit circuit assurant la liaison électrique entre la pale de rotor (5) et une mise à la terre (27).

2. Station éolienne selon la revendication 1, **caractérisée en ce que** le dispositif de décharge continue est disposé en parallèle à un éclateur d'un système de protection contre la foudre de la station éolienne.

3. Station éolienne selon l'une quelconque des revendications précédentes, **caractérisée en ce que** la résistance ohmique (1) a une valeur d'au moins 10 kQ, de préférence 50 kΩ.

4. Station éolienne selon l'une quelconque des revendications précédentes, **caractérisée en ce que** la résistance inductive (2) présente une valeur d'au moins 2 µH, de préférence supérieure à 10 µH.

5. Station éolienne selon l'une quelconque des revendications précédentes, **caractérisée en ce que** la résistance inductive (2) est constituée d'une résistance en fil métallique enroulé (1a).

6. Station éolienne selon l'une quelconque des revendications précédentes, **caractérisée en ce que** la résistance ohmique (1) est constituée d'une résistance en fil métallique (1a).

7. Station éolienne selon l'une quelconque des revendications précédentes, **caractérisée en ce que** le dispositif de décharge continue de charge électrostatique est relié électriquement d'une part au raccord de décharge contre la foudre (8) de la pale du rotor (5) et d'autre part au raccord (adaptateur de pale) de la pale de rotor.

8. Station éolienne selon la revendication 7, **caractérisée en ce que** les charges évacuées par le dispositif de décharge continue de charge électrostatique sont déchargées au travers du moyeu de la station éolienne.

9. Station éolienne selon l'une quelconque des revendications précédentes, **caractérisée par** un support machine disposé de manière tournante sur un soubassement, avec un axe de rotor rattaché au moyen d'un palier au support machine avec un moyeu de rotor, avec au moins une pale de rotor et un dispositif de transfert de protection contre la foudre des pales de rotor à une pièce conductrice fixe du support machine mise à la terre, le dispositif de transfert de protection contre la foudre ayant la structure d'un système parafoudre situé dans la zone de la base de la pale de rotor (24), à une distance isolante du moyeu du rotor et ayant une liaison électrique avec ladite base de la pale de rotor (24), présentant une pièce en saillie faisant transfert (11) rapprochée à une distance prédéterminée de la pièce fixe, électriquement conductrice du support machine (14).

10. Station éolienne selon la revendication 9, **caractérisée en ce que** le système parafoudre est une tige de capture (9).

11. Station éolienne selon la revendication 9 ou 10, **caractérisée en ce que** la pièce fixe, électriquement conductrice du support machine (14) est un anneau de décharge (10) disposé de manière coaxiale à l'axe du rotor, ce dernier présentant une voie de décharge de la foudre (17) prédéterminée dans sa zone située près de la pièce en saillie faisant transfert (11).

12. Station éolienne selon la revendication 10, **caractérisée en ce que** l'extrémité libre (25) de la tige de capture (9) éloignée de la pièce en saillie faisant transfert (11) est rapprochée à une distance prédéterminée d'un élément électriquement conducteur disposé sur la base de la pale de rotor (24).

13. Station éolienne selon l'une quelconque des revendications précédentes, avec un support machine disposé de manière à pouvoir tourner sur un soubassement, avec un axe de rotor rattaché au support machine au travers d'un palier avec un moyeu de rotor et avec au moins une pale de rotor, **caractérisée en ce que** chaque pale de rotor (5) présente des éléments conducteurs raccordés électriquement entre eux, disposés à sa pointe et à la base de la pale de rotor (24), à une distance isolante du moyeu du rotor.

14. Station éolienne selon la revendication 13, **caractérisée en ce que** l'élément conducteur situé à la pointe de la pale de rotor (5) est une pièce moulée d'aluminium (6).

15. Station éolienne selon la revendication 13 ou 14, **caractérisée en ce que** des éléments conducteurs (7) sont disposés dans le bord avant ou arrière de chaque pale de rotor (5), reliant électriquement entre eux les éléments conducteurs situés à la pointe de la pale de rotor (5) et à la base de la pale de rotor (24).

16. Station éolienne selon l'une quelconque des revendications 12 à 15, **caractérisée en ce que** l'élément conducteur situé sur la base de la pale de rotor (24) est un anneau d'aluminium (8) courant horizontalement au moins le long d'un secteur de la surface de la base de la pale de rotor (24).

17. Station éolienne selon l'une quelconque des revendications précédentes, avec un support machine disposé de manière à pouvoir tourner sur un soubassement, avec un axe de rotor fixé au support machine au travers d'un palier avec un moyeu de rotor et avec au moins une pale de rotor, **caractérisée en ce qu'**un élément parafoudre est disposé dans une zone du support machine (14) rapprochée du soubassement, lequel élément parafoudre se trouve en contact par friction avec un élément conducteur du soubassement.

18. Station éolienne selon la revendication 17, **caractérisée en ce que** l'élément parafoudre a la forme d'une tige-poussoir (19) affectée d'une pression d'application.

19. Station éolienne selon la revendication 17 ou 18, **caractérisée en ce que** l'élément conducteur du soubassement est un plateau de friction (20) situé dans la zone supérieure du soubassement dans un plan horizontal et de manière coaxiale à l'axe de rotation du support machine (14).

20. Station éolienne selon l'une quelconque des revendications précédentes, **caractérisée en ce que** la pale de rotor est constituée d'un matériau électriquement non-conducteur, par exemple en plastique renforcé de fibres de verre.

21. Station éolienne équipée d'une installation de protection contre la foudre et d'un système parafoudre, **caractérisée en ce que** la station éolienne présente un dispositif de décharge de charges électrostatiques d'au moins une pale de rotor (5) de la station éolienne, et **en ce que** la station éolienne présente un moyeu de rotor (30) auquel sont fixées les pales du rotor (5) et dans la zone du moyeu des pales de rotor par une autre voie que les charges induites par un coup de foudre, les charges électrostatiques circulant à travers le moyeu (30) et les charges induites par un coup de foudre étant conduites en contournant le moyeu.
